# EUROPÄISCHE PATENTSCHRIFT

(11) **EP 1 022 294 B1**
(45) Veröffentlichungstag und Bekanntmachung des Hinweises auf die Patenterteilung: **01.06.2005**
(21) Anmeldenummer: 00250019.7
(22) Anmeldetag: 24.01.2000
(51) Int. Cl.: C08F 290/10, C09D 11/08

(54) **Pfropfpolymerisat auf Stärkebasis, Verfahren zu seiner Herstellung und seine Verwendung in Druckfarben und Überdrucklacken**
Graft polymer based on starch, process for its preparation and its use as printing ink and overprinting varnish
Polymère greffé à base d'amidon, son procédé de préparation et son utilisation comme encre d' imprimerie et comme vernis de surimpression

(30) Priorität: 25.01.1999 DE 19903979
(43) Veröffentlichungstag der Anmeldung: 26.07.2000
(73) Patentinhaber: Worlée-Chemie G.m.b.H., 22113 Hamburg (DE)
(72) Erfinder: Brune, Dirk, Dipl. Ing., 23617 Stockelsdorf (DE); Eben-Worlée, Reinhold von, Dipl. Ing., 20249 Hamburg (DE)
(74) Vertreter: UEXKÜLL & STOLBERG

(56) Entgegenhaltungen:
- EP-A- 0 000 247
- WO-A-92/13894
- WO-A-93/20119
- US-A- 4 060 506
- US-A- 4 079 025

## Beschreibung

Die Erfindung betrifft ein Pfropfpolymerisat auf Stärkebasis, Verfahren zu seiner Herstellung und seine Verwendung in Druckfarben und Überdrucklacken.

Derzeit verwendete Bindemittel für Druckfarben und Überdrucklacke basieren in der Regel auf Polymerdispersionen mit einem Festkörpergehalt von 40-50 Gew.-% aus Styrol und dessen Derivaten, die als Copolymere mit Acrylsäure verwendet werden. Dieses macht eine Neutralisation mit hohen Konzentrationen an Ammoniak oder Aminen notwendig, so daß die flüchtigen Bestandteile im Produkt unerwünscht hoch sind. Für die Herstellung werden Rohstoffe auf synthetischer Basis eingesetzt.

Andererseits sind im Stand der Technik eine Vielzahl von Produkten auf Stärkebasis bekannt. Stärke findet in nativer oder modifizierter Form vielfältige Anwendungen in der Lebensmittel-, Papier-, Textil-, Klebstoffindustrie usw. Die Modifizierung der Stärke kann durch physikalische und chemische Einwirkungen geschehen sowie durch die Einführung von Fremdgruppen und Pfropfreaktionen.

Der Erfindung lag die Aufgabe zugrunde, unter teilweisem oder vollständigem Einsatz nachwachsender Rohstoffe oder deren Modifikationen ein verbessertes Pfropfpolymerisat zu schaffen, das zur Herstellung von Polymerdispersionen mit geringen flüchtigen Bestandteilen geeignet ist und vorteilhaft als Bindemittel in Druckfarben oder Überdrucklacken verwendet werden kann. Dabei sollte das Eigenschaftsprofil der derzeit verwendeten Bindemittel so wenig wie möglich verändert werden. Insbesondere Eigenschaften wie Glanz, Lagerstabilität, Verträglichkeit, Wasserfestigkeit und Verarbeitbarkeit sollten dabei mindestens auf einem vergleichbaren Niveau liegen.

Zur Lösung dieser Aufgabe wird ein Pfropfpolymerisat auf Basis von derivatisierter Stärke oder derivatisierten Stärkeprodukten als Pfropfsubstrat vorgeschlagen, das dadurch gekennzeichnet ist, daß Stärke oder Stärkeprodukte über mit bifunktionellen Monomeren derivatisierte Stellen mit Ethylenderivaten pfropfpolymerisiert ist bzw. sind.

Gegenstand der Erfindung ist ferner ein Verfahren zur Herstellung des erfindungsgemäßen Pfropfpolymerisats, das dadurch gekennzeichnet ist, daß
(i) eine wäßrige Stärke- oder Stärkeproduktelösung oder -dispersion hergestellt wird,
(ii) die gelöste oder dispergierte Stärke oder das gelöste oder dispergierte Stärkeprodukt mit bifunktionellen Monomeren derivatisiert wird und
(iii) die derivatisierte Stärke oder das derivatisierte Stärkeprodukt mit Ethylenderivaten pfropfpolymerisiert wird.

Das so erhaltene Pfropfpolymerisat kann, beispielsweise in Form einer Polymerdispersion, in eine Druckfarbe oder einen Überdrucklack eingearbeitet werden. Somit ist ferner die Verwendung des erfindungsgemäßen Pfropfpolymerisats in Druckfarben und Überdrucklacken Gegenstand der Erfindung.

Bevorzugte Ausführungsformen der Erfindung ergeben sich aus den Unteransprüchen und der folgenden Beschreibung.

Das Verfahren zur Herstellung einer solchen Polymerdispersion läuft in mehreren Stufen ab. Der erste Schritt (i) umfaßt die Herstellung einer Lösung bzw. Dispersion aus Stärke bzw. Stärkeprodukten und Wasser.

Unter Stärke bzw. Stärkeprodukten im Sinne dieser Erfindung sind sowohl native Stärken aus verschiedenen Stärkequellen wie weiter unten beschrieben als auch modifizierte Stärkeformen wie teilweise abgebaute Stärken, Stärkezwischenprodukte und dergleichen zu verstehen. Im folgenden werden daher die genannten Begriffe synonym verwendet, d.h. die nachfolgenden Ausführungen beziehen sich hauptsächlich auf Stärke, gelten aber entsprechend auch für die erfindungsgemäß verwendbaren Stärkeprodukte.

Die in Wasser lösliche bzw. dispergierbare Stärke kann sowohl aus Getreiden wie Mais, Weizen, Hirse oder Reis als auch aus Knollen und Wurzeln wie Kartoffeln und Tapioka oder Hülsenfrüchten und anderen Naturprodukten gewonnen werden. Vorteilhaft können auch Stärkeprodukte wie Dextrine oder modifizierte Dextrine verwendet werden. Insbesondere werden hydrolysierte Stärken verwendet. Beispielsweise können sogenannte Röstdextrine wie gelbes Kartoffeldextrin mit hoher oder mittlerer Viskosität, Octenyl-Succinat-Wachsmaisstärke und/oder oxydierte Wachsmaisstärke verwendet werden. Es können auch Kombinationen der genannten Stärkeformen verwendet werden.

Man verwendet also vorzugsweise eine oder mehrere weitestgehend wasserlösliche Stärken, die z.B. in hydrolysierter Form vorliegen. Der Lösungsvorgang erfolgt im allgemeinen in einem geeigneten Reaktor, der mit einer Wärmequelle, Rühr- und Kühlvorrichtungen und Thermometer versehen ist. Durch Erwärmen auf etwa 85 bis 95 °C wird der Lösungsvorgang beschleunigt. Der Lösungsvorgang dauert im allgemeinen 1 bis 2 Stunden. Er wird durch in geeigneten zeitlichen Abständen aus dem Reaktor entnommene Proben, aus denen mit Hilfe einer Rakel und Glasplatte 60 µm Aufzüge gefertigt werden, visuell auf ausreichende Auflösung der Stärke kontrolliert. Die Kontrolle beschränkt sich auf die Größe und den Gehalt an Stippen in dem getrockneten Film. Erst wenn der 60 µm Aufzug annähernd stippenfrei und frei von Gelteilchen ist, wird der Löse- bzw. Dispergiervorgang als abgeschlossen angesehen.

Der zweite Verfahrensschritt (ii) umfaßt die Derivatisierung der gelösten bzw. dispergierten Stärke mit bifunktionellen Monomeren. Die dabei verwendeten bifunktionellen Monomere enthalten eine mit den in der Stärke befindlichen freien Hydroxylgruppen kondensierbare funktionelle Gruppe und eine Vinylgruppe.

Vorzugsweise werden die bifunktionellen Monomere N-Methylolacrylamid, N-Methylolmethacrylamid, Hydroxyethylmethacrylat, Hydroxypropylmethacrylat oder Mischungen derselben für die Kondensationsreaktion verwendet.

Für eine erfolgreiche Kondensation, sowie auch für die spätere Polymerisation, ist es wichtig, spezifische Katalysatorsysteme und Temperaturbereiche zu verwenden.

Als Katalysatoren können Aluminiumchlorid, Aluminiumzirkoniumacetat, Ammoniumchlorid, Ammoniumphosphat, Magnesiumchlorid, organische Säuren wie Milchsäure, Zitronensäure, para-Toluolsulfonsäure, Natriumchlorat oder -perchlorat in Kombination mit Magnesium oder Zinksalzen, Zinknitrat, Zinkperchlorat verwendet werden.

Der zweite Verfahrensschritt wird im allgemeinen bei einer Temperatur von 80 bis 100 °C, vorzugsweise 90 bis 100 °C und insbesondere etwa 90 °C durchgeführt. Die Reaktionsdauer beträgt im allgemeinen 1 bis 5, vorzugsweise 2 bis 4 und insbesondere etwa 3 Stunden. Beispielsweise kann die Kondensation bei 90 °C und über einen Zeitraum von 3 Stunden durchgeführt werden. In Abhängigkeit von den verwendeten Produktionsanlage und den verwendeten Reaktortypen und -größen können jedoch auch abweichende Reaktionszeiten erforderlich sein. Es liegt dabei in dem Ermessen des Fachmanns, die Reaktionszeiten dann entsprechend anzupassen.

Die Kondensationsreaktion in der Wasserphase läuft im allgemeinen nicht vollständig ab. Beispielsweise kann die Reaktion bis zu einem Umsatz von ca. 20 % des bifunktionellen Monomeren durchgeführt werden. Die übrigen nicht abreagierten Monomeranteile werden dann bei der späteren radikalischen Polymerisation in das Pfropfpolymerisat mit eingebaut und tragen so auch mit zu der Stabilität und den günstigen Eigenschaften des Polymers bei.

Das Ergebnis dieses Verfahrensschrittes kann analytisch verfolgt werden. Die Untersuchung bezieht sich beispielsweise auf das Produkt der Kondensationsreaktion mit der gelösten Stärke und N-Methylolacrylamid. Dazu wird nach dem Kondensationsschritt das Kondensat beispielsweise mit der 7-fachen Menge an Ethanol ausgefällt und mit einer 50%igen Ethanollösung mehrfach gewaschen. Danach wird eine Stickstoffbestimmung nach Kjeldahl (nach DIN EN ISO 3188) durchgeführt. Die Stickstoffbestimmung nach Kjeldahl ergab nach Auswertung der Proben und Blindproben, daß die Kondensation im allgemeinen in einem Umfang von ca. 20 % abläuft.

Nach der Kondensationsreaktion kann dann als dritter Schritt (iii) die Radikalreaktion mit dem oder den Ethylenderivaten ablaufen.

Das dadurch erhältliche Pfropfpolymerisat ist im wesentlichen über die mit den bifunktionellen Monomeren derivatisierten Stellen der Stärke mit Ethylenderivaten pfropfpolymerisiert. Daher werden auch solche Pfropfpolymerisate vom Gegenstand der vorliegenden Erfindung erfaßt, bei denen ein geringer Teil der Pfropfpolymerisation an Stärkestellen stattfindet, die nicht mit den erfindungsgemäßen bifunktionellen Polymeren derivatisiert sind.

Als Ethylenderivate können folgende Monomeren allein oder als Mischungen verwendet werden: Acrylverbindungen und Methacrylverbindungen wie Acrylsäure, Methacrylsäure, Acrylamid, Methacrylsäureamid, Acrylnitril, Methacrylnitril, N-Methylolacrylamid, N-Methylolmethacrylamid, Methylacrylat, Methylmethacrylat, Ethylacrylat, Etylmethacrylat, Propylacrylat, Isopropylmethacrylat, Isobutylacrylat, n-Butylacrylat, Amylacrylat, n-Hexylmethacrylat, Cyclohexylmethacrylat, 2-Ethylhexylmethacrylat, 2-Ethylhexylacrylat, Cyclohexylacrylat, Heptylacrylat, Dodecylacrylat, Octadecylacrylat, Octylacrylat, n-Butylmethacrylat, Isobutylmethacrylat, Decylmethacrylat, Dodecylmethacrylat, Octadecylmethacrylat, Allylacrylat, Allylmethacrylat, 2-Dimethylaminoethylacrylat, 2-tert.-Butylaminoethylmethacrylat, 2,3-Epoxypropylmethacrylat, 2-Hydroxylethylmethacrylat, 2-Hydroxypropylmethacrylat, Ethylenglykoldimethacrylat, 2-Hydroxylethylacrylat, 2-Hydroxypropylacrylat, 2-Ethyl-2(hydroxymethyl)-propandiol-(1,3)-trimethacrylat (Trimethylolpropantriacrylat), Glycidylmethacrylat, 2-Ethoxyethylmethacrylat, 2-Butoxymethylmethacrylat, Furfurylmethacrylat, 2-Trimethylammoniumethylmethacrylatchlorid, Stearylmethacrylat, 2-Methoxyethylacrylat, 2-Butoxyethylacrylat, Butandiolmonoacrylat, Butandioldiacrylat, Hexandioldiacrylat, Diethylaminoethylacrylat, Dimethylaminoneopentylacrylat, Ethyldiglykolacrylat, β-Phenoxyethylacrylat, Laurylacrylat, Pentaerythrittriacrylat, Pentaerythrittetraacrylat, Dihydrodicylopentadienylacrylat, Vinylacrylat, Triethylenglykoldiacrylat, Tetraethylenglykoldiacrylat, Tripropylenglykoldiacrylat, 3-Methylpentandiolacrylat, Ethylenglykoldimethacrylat, Butandioldimethacrylat, Neopentylglykoldimethacrylat, Triethylenglykoldimethacrylat, Dibromopropylacrylat, Dimethylaminoethylmethacrylat; Vinylverbindungen, wie Vinylacetat, Vinylpropionat, Allylacetat, Bernsteinsäure-di-allylester, Adipinsäuredivinyl-ester und Ethylhexansäurevinylester, Versaticsäurevinylester, N-Vinyl-2-pyrrolidon, Allylalkohol, Vinylsulfonsäure, Maleinsäureanhydrid, Maleinsäure, Fumarsäure, Itaconsäure, Natrium-p-styrolsulfonat, Dibutylmaleinat, Dibutylfumarat, Crotonsäure und Kohlenwasserstoffe, wie Ethylen, Butadien, Styrol, a-Methylstyrol.

Vorzugsweise werden als Ethylenderivate Vinylacetat, Methylacrylat, Methylmethacrylat, Ethylmethacrylat, Hydroxyethylmethacrylat, Hydroxymethylmethacrylat, Glycidylmethacrylat, Acrylnitril, Methacrylnitril, Acrylamid, Butadien, Styrol und Maleinsäureanhydrid sowie Mischungen derselben eingesetzt.

Die Pfropfpolymerisation mit den Ethylenderivaten wird vorzugsweise nach einem Dosierverfahren durchgeführt. Die Dosierdauer liegt im allgemeinen zwischen 20 bis 180 Minuten, vorzugsweise 30 bis 150 Minuten und insbesondere 30 bis 90 Minuten. In Abhängigkeit von den verwendeten Produktionsanlage und den verwendeten Reaktortypen und -größen können jedoch auch abweichende Reaktionszeiten erforderlich sein. Es liegt dabei in dem Ermessen des Fachmanns, die Reaktionszeiten dann entsprechend anzupassen.

Die Reaktionstemperatur sollte im Bereich von 60 bis 90 °C, vorzugsweise 60 bis 80 °C und insbesondere 70 bis 80 °C liegen.

Als Katalysator eignen sich sowohl radikalbildende Initiatoren als auch Redox-Systeme. Als radikalbildende Polymerisationsinitiatoren können Alkali- und Ammoniumsalze von Peroxysäuren wie Kalium-, Natrium- und Ammoniumpersulfat verwendet werden. Als weitere Polymerisationsinitiatoren können Wasserstoffperoxid, Perborate und Azoverbindungen wie Azodiisobutyronitril verwendt werden. Auch können organische Peroxide und Hydroperoxide wie Benzoylperoxid, t-Butylhydroperoxid, Diisopropylbenzenhydroperoxid, t-Butylperbenzoat verwendet werden. In Redoxsystemen werden zusätzlich Aktivatoren wie Natriumhydrogensulfit, Natriumdisulfit, Natriumformaldehydsulfoxylat, Ascorbinsäure, n-Dodecylmerkaptan und n-Butyl-3-merkaptopropionat in Kombination mit einem oder mehreren Initiatoren eingesetzt.

Um das gewünschte Eigenschaftsprofil zu erreichen, werden die Rohstoffe in bestimmten Verhältnissen zueinander verwendet, die im Bereich 30 bis 50 Gew.-% Stärke, 3 bis 7 Gew.-% bifunktionelles Monomer, und 43 bis 67 Gew.-% Ethylenderivat, jeweils bezogen auf den Festkörpergehalt der erhaltenen Dispersion liegen. Bei zu geringem Anteil an Stärke erhält man nämlich Polymerdispersionen mit hohem Agglomeratanteil und sehr trübe Polymerfilme mit sehr wenig Glanz. Wird die Stärkekonzentration zu hoch, steigt zwar der Glanz, aber die Filme werden zu hydrophil oder es steigt die Viskosität der Polymerdispersion, so daß die Verarbeitbarkeit nicht mehr möglich ist. Die Derivatisierung ist insbesondere notwendig, um den darauffolgenden Pfropfungsschritt zu ermöglichen. Durch eine ausreichende Konzentration an Ethylenderivat werden die für die Anwendung notwendigen Eigenschaften wie Hydrophobie und Glanz ermöglicht.

Nach Abschluß der Reaktion wird das Produkt im allgemeinen auf Raumtemperatur gekühlt und mit einer technischen, d.h. etwa 26 %igen wäßrigen Ammoniaklösung auf einen pH-Wert von 8,5 ± 0,5 eingestellt, wobei in der Regel weniger als 1 Gew.-% Ammoniaklösung, bezogen auf die Polymerdispersion, benötigt werden. Es können dann weitere herkömmliche Zusätze für Bindemittel wie Konservierungsmittel, Neutralisationsmittel, Entschäumer, Benetzungsmittel und dergleichen zugegeben zugegeben werden. So kann die erfindungsgemäße Polymerdispersion beispielsweise durch Zugabe eines handelsüblichen Konservierungsmittels auf Isothiazolinonbasis gegen mikrobiellen Befall geschützt werden.

Der Festkörpergehalt der erfindungsgemäßen Dispersionen beträgt im allgemeinen 30 bis 70 Gew.-%, vorzugsweise 30 bis 60 Gew.-% und insbesondere etwa 40 Gew.-%. Sie weisen im allgemeinen eine Viskosität im Bereich von 200 bis 1000 mPas, insbesondere etwa 500 bis 600 mPas auf. Die Teilchengröße des Pfropfpolymerisats liegt im allgemeinen bei 0,1 bis 0,6 µm, vorzugsweise 0,2 bis 0,5 µm und insbesondere 0,28 bis 0,42 µm.

Es ist ein deutlicher Vorteil des erfindungsgemäßen Verfahrens, daß es ohne den Zusatz von Tensiden oder Emulgatoren durchgeführt werden kann.

Ein weiterer Vorteil des erfindungsgemäßen Verfahrens besteht darin, daß die Stufen (i) bis (iii) unmittelbar nacheinander in wäßriger Phase, vorzugsweise in einer Reaktionsvorrichtung durchgeführt werden können, ohne daß Zwischenschritte wie Trennoperationen notwendig sind.

Das so erhaltene Pfropfpolymerisat kann dann, beispielsweise in Form einer wie oben beschrieben erhaltenen wässrigen Polymerdispersion, nach herkömmlichen, dem Fachmann bekannten Techniken in Druckfarben wie Flexodruckfarben oder Überdrucklacke eingearbeitet werden.

Die erfindungsgemäßen Polymerdispersionen zeichnen sich ferner im allgemeinen durch eine hohe Viskositätsstabilität aus, d.h. trotz eines hohen Festkörpergehalts verändert sich die Viskosität über einen längeren Zeitraum nicht. Die bei stärkehaltigen Produkten übliche Retrogradation, die zum Anstieg der Viskosität oder zu Phasentrennung durch Aufrahmen oder Absetzen führt, wird bei diesen Polymerdispersionen durch geeignete Selektion der eingesetzten Stärkeprodukte ausgeschlossen. Die erfindungsgemäßen Polymerdispersionen sind im allgemeinen feindispers und man erhält aus ihnen stippenfreie Beschichtungen mit einem hohen Glanz. Sie lassen sich mit den üblichen Filmbildehilfsmitteln bei Raumtemperatur leicht verfilmen. Eine Neutralisation mit Ammoniak oder Aminen ist wie oben beschrieben nur in sehr geringem Umfang notwendig, so daß der Anteil flüchtiger Bestandteile als unkritisch zu betrachten ist. Im allgemeinen liegt der Anteil flüchtiger Bestandteile ohne Berücksichtigung von Wasser unter 1 Gew.-%, beispielsweise bei 0,1 bis 0,9 Gew.-%, vorzugsweise unter 0,5 Gew.-%.

### Beispiel 1

### Herstellung des Pfropfpolymerisats

In einem 2-Liter-Vierhalsreaktor versehen mit einem Rührer, Thermometer, Rückflußkühler und Monomerzuführung wurden 366 g eines getrockneten Maisdextrins in 1040 g deionisiertem Wasser bei einer Temperatur von 85 bis 95 °C und unter Stickstoffatmosphäre gelöst. Der Lösevorgang dauerte 60 Minuten. Dann wurden bei 90 °C als Monomer 38 g N-Methylolacrylamid als 48 Gew.-% Lösung in Wasser zugegeben. Eine 6 Gew.-% Lösung aus Aluminiumchlorid und Wasser wurde als Katalysator verwendet. 66 g dieser Lösung wurden in den Reaktor gegeben. Die Reaktionsdauer betrug ca. 3 Stunden. Danach wurde der Reaktor auf 65 °C gekühlt. 331 g Styrol wurden zugegeben und 20 Minuten emulgiert. Das Katalysatorsystem aus 4 g tert.-Butylhydroperoxid und einer Mischung aus 0,8 g Ascorbinsäure und 1,5 g Natriumdisulfit in 8 g entionisiertem Wasser wurde frisch hergestellt und zugegeben. Nach erfolgter exothermer Reaktion wurden 130 g Styrol im Dosierverfahren zugegeben. Die Dosiergeschwindigkeit lag bei 4,5 g/min. Parallel zur Monomerdosierung wurden 4 g tert.-Butylhydroperoxid und eine Mischung aus 1,2 g Ascorbinsäure und 2,2 g Natriumdisulfit gelöst in 20 g Wasser dosiert. Es wurde darauf geachtet, daß die Reaktionstemperatur während der anschließenden Pfropfungsreaktion 80 °C nicht überschritt.

Nach dem Abschluß des Dosierungsvorganges wurden noch jeweils 0,5g der Ascorbinsäure in 4 g Wasser und 0,5 g tert.-Butylhydroperoxid zugegeben. Die Temperatur wurde für eine Stunde bei 80 °C gehalten. Der Restmonomergehalt lag dann bei < 0,1 Gew.-%. Dann wurde die Polymerdispersion auf 20 °C abgekühlt und mit Ammoniak neutralisiert.

Die Untersuchung des Reaktionsproduktes des Kondensationsschrittes nach Kjeldahl ergab einen Umsatz von 20,6 %. Der Festkörpergehalt der Polymerdispersion war 40 ± 1 Gew.-%. Der pH-Wert betrug 8,5 und die Viskosität 550 mPas. Der Glanz lag bei 90 %. Die Mindestfilmbildetemperatur lag bei ca. 75 bis 80 °C. Die Pendelhärte des getrockneten Filmes lag bei ca. 200 Sekunden. Das Ergebnis der Teilchengrößenbestimmung war 0,28 bis 0,42 µm. Die Beschichtungsbeurteilung und die Wasserbeständigkeit sind vergleichbar zu den Standardprodukten auf Basis synthetischer Rohstoffe.

Die obigen Untersuchungen der Polymerdispersion erfolgten mit den folgenden Methoden:
1. Beurteilung des Films: 6 µm Aufzug der Polymerdispersion auf einer Glasplatte mit Hilfe einer Rakel und visuelle Kontrolle auf Stippen (Anzahl und Größe).
2. Visuelle Beurteilung des Films auf Trübung.
3. Kontrolle der Wasserbeständigkeit am getrockneten Film mit Stoppuhr und optischer Beurteilung auf Störungen des Films nach Wasserkontakt in zeitlichen Abständen.
4. Bestimmung der Mindestfilmbildetemperatur nach DIN 53787.
5. Bestimmung der Viskosität mit einem Brookfield - Rotationsviskosimeter LVT, bei 20°C (Spindel 2, 30 UpM (Umdrehungen pro Minute)).
6. Bestimmung des pH-Wertes nach DIN 53785.
7. Bestimmung der nichtflüchtigen Bestandteile, d.h. des Festkörpergehalts nach DIN 53216, Teil 1 (1 h, 125 °C ).
8. Bestimmung der Pendelhärte nach König nach DIN 53157.
9. Bestimmung des Glanzes durch einen 12 µm Aufzug der Polymerdispersion auf einen Chromoluxkarton. Die Messung erfolgte nach TRIGLOSS bei einem Winkel von 60°.
10. Bestimmung der Teilchengröße durch Photonenkorrelationsspektroskopie.

### Beispiel 2

### Herstellung eines Überdrucklackes

Zusammensetzung (alle Angaben in Gew.-% bezogen auf das Gesamtgewicht der Zusammensetzung):

| | |
|---|---|
| Stärkepolymerdispersion (40%ig in Wasser) | 55,0 |
| WorléeCryl 8025* | 25,0 |
| WorléeWax 8510** | 5,0 |
| 1,2 Propylenglykol | 2,0 |
| Entschäumer*** | 0,2 |
| Netzmittel**** (10%ig in Wasser) | 0,3 |
| Wasser | 12.5 |

| | |
|---|---|
| * = Acrylharzlösung, 25%ig in Wasser | |
| ** = Polyethylenwachsdispersion, 35%ig in Wasser | |
| *** = z.B. Handelsprodukt Dow Corning 65 der Firma Dow Corning | |
| ****= z.B. Handelsprodukt FC 129 der Firma 3M | |

Die oben genannten Bestandteile wurden miteinander vermischt und die Viskosität mit Wasser auf ca. 20 s (DIN 53 211) eingestellt. Die Stärkpolymerdispersion war zuvor wie in Beispiel 1 hergestellt worden. Der Glanz des getrockneten Films bei einem Winkel von 60° betrug < 80 %, die Heißsiegelfestigkeit (3 bar/1 s) betrug 130°C. Die Pendelhärte betrug 200 s.

### Beispiel 3

### Herstellung einer wäßrigen, weißen Flexodruckfarbe

Zusammensetzung (alle Angaben in Gew.-% bezogen auf das Gesamtgewicht der Zusammensetzung):

| | |
|---|---|
| WorléeCryl 8025* | 25,0 |
| Titandioxid | 30,0 |
| Entschäumer*** | 0,3 |
| Stärkepolymerdispersion (40%ig in Wasser) | 35,5 |
| WorleeWax 8510** | 3,0 |
| 1,2 Propylenglykol | 2,0 |
| Netzmittel**** (10%ig in Wasser) | 0,2 |
| Wasser | 4,0 |

| | |
|---|---|
| * = Acrylharzlösung, 25%ig in Wasser | |
| ** = Polyethylenwachsdispersion, 35%ig in Wasser | |
| *** = z.B. Handelsprodukt Dow Corning 65 der Firma Dow Corning | |
| ****= z.B. Handelsprodukt FC 129 der Firma 3M | |

25 Gewichtsteile WorleeCryl 8025, 30 Gewichtsteile Titandioxid und 0,3 Gewichtsteile Entschäumer wurden in einem Dissolver (Perlmühle) 20 min. lang intensiv miteinander vermischt. Anschließend wurden die restlichen oben genannten Komponenten in den oben genannten Verhältnissen zugegeben und die Viskosität wurde mit Wasser auf 20 s (DIN 53 211) eingestellt. Die Stärkepolymerdispersion war zuvor wie in Beispiel 1 hergestellt worden. Der Glanz des getrockneten Films bei einem Winkel von 60° betrug < 40 %, die Heißsiegelfestigkeit (3 bar/1 s) betrug 150°C. Die Pendelhärte betrug 200 s.

## Patentansprüche

1. Pfropfpolymerisat auf Basis von derivatisierter Stärke oder derivatisierten Stärkeprodukten als Pfropfsubstrat, **dadurch gekennzeichnet, daß** Stärke oder Stärkeprodukte über mit bifunktionellen Monomeren derivatisierte Stellen mit Ethylenderivaten pfropfpolymerisiert ist bzw. sind, wobei die bifunktionellen Monomeren eine mit der in der Stärke oder den Stärkeprodukten vorhandenen freien Hydroxylgruppe kondensierbare funktionelle Gruppe und eine Vinylgruppe enthalten und das Pfropfpolymerisat 30 bis 50 Gew.-% von Stärke oder Stärkeprodukten abgeleitete Einheiten, 3 bis 7 Ges.-% von bifunktioellen Monomeren abgeleitete Einheiten und 43 bis 67 Gew.-% von Ethylenderivaten abgeleitete Einheiten, jeweils bezogen auf den Festkörpergehalt der erhaltenen Dispersion, enthält.

2. Pfropfpolymerisat nach Anspruch 1, **dadurch gekennzeichnet, daß** die zugrundeliegende Stärke Stärke aus Getreide, Knollen, Wurzeln, Früchten und/oder Hülsenfrüchten ist.

3. Pfropfpolymerisat nach Anspruch 1, **dadurch gekennzeichnet, daß** die zugrundeliegenden Stärkeprodukte aus hydrolysierten Stärken, vorzugsweise Röstdextrinen und modifizierten Dextrinen sowie Kombinationen derselben ausgewählt sind.

4. Pfropfpolymerisat nach einem der vorhergehenden Ansprüche, **dadurch gekennzeichnet, daß** die bifunktionellen Monomere ausgewählt sind aus der Gruppe bestehend aus N-Methylolacrylamid, N-Methylolmethacrylamid, Hydroxyethylmethacrylat, Hydroxypropylmethacrylat und Mischungen derselben.

5. Pfropfpolymerisat nach einem der vorhergehenden Ansprüche, **dadurch gekennzeichnet, daß** die Ethylenderivate ausgewählt sind aus der Gruppe bestehend aus Vinylacetat, Methylacrylat, Methylmethacrylat, Ethylmethacrylat, Hydroxyethylmethacrylat, Hydroxymethylmethacrylat, Glycidylmethacrylat, Acrylnitril, Methacrylnitril, Acrylamid, Butadien, Styrol, Maleinsäureanhydrid und Mischungen derselben.

6. Pfropfpolymerisat nach einem der vorhergehenden Ansprüche,
**dadurch gekennzeichnet, daß** es 3 bis 5 Gew.-% bifunktionelles Monomer enthält.

7. Pfropfpolymerisat nach einem der vorhergehenden Ansprüche, **dadurch gekennzeichnet, daß** es in Form einer wäßrigen Polymerdispersion vorliegt.

8. Pfropfpolymerisat nach Anspruch 7, **dadurch gekennzeichnet, daß** die Polymerdispersion weitere für Polymerdispersionen übliche Zusätze, insbesondere Konservierungsmittel, Neutralisationsmittel, Entschäumer und Benetzungsmittel enthält.

9. Pfropfpolymerisat nach Anspruch 7 oder 8, **dadurch gekennzeichnet, daß** der Festkörpergehalt der Dispersion 30 bis 70 Gew.-%, vorzugsweise 30 bis 60 Gew.-% und insbesondere etwa 40 Gew.-% beträgt.

10. Pfropfpolymerisat nach einem der Ansprüche 7 bis 9, **dadurch gekennzeichnet, daß** die Polymerdispersion mit Neutralisationsmittel neutralisiert ist und ohne Berücksichtigung von Wasser weniger als 1 Gew.-%, insbesondere weniger als 0,5 Gew.-% flüchtige Bestandteile enthält.

11. Pfropfpolymerisat nach einem der Ansprüche 7 bis 10, **dadurch gekennzeichnet, daß** die Polymerdispersion eine Viskosität im Bereich von 200 bis 1000 mPas, insbesondere etwa 500 bis 600 mPas aufweist.

12. Pfropfpolymerisat nach einem der Ansprüche 7 bis 11, **dadurch gekennzeichnet, daß** die Teilchengröße des Pfropfpolymerisats 0,1 bis 0,6 µm, vorzugsweise 0,2 bis 0,5 um und insbesondere 0,28 bis 0, 42 µm beträgt.

13. Verfahren zur Herstellung eines Pfropfpolymerisats gemäß einem der vorhergehenden Ansprüche, **dadurch gekennzeichnet, daß**
(i) eine wäßrige Stärke- oder Stärkeproduktlösung oder -dispersion hergestellt wird,
(ii) die gelöste oder dispergierte Stärke oder das gelöste oder dispergierte Stärkeprodukt mit bifunktionellen Monomeren derivatisiert wird und
(iii) die derivatisierte Stärke oder das derivatisierte Stärkeprodukt an den derivatisierten Stellen mit Ethylenderivaten pfropfpolymerisiert wird.

14. Verfahren nach Anspruch 13, **dadurch gekennzeichnet, daß** es in wäßriger Phase ohne Zusatz von Tensiden oder Emulgatoren ausgeführt wird.

15. Verfahren nach Anspruch 13 oder Anspruch 14, **dadurch gekennzeichnet, daß** die Schritte (i) bis (iii) unmittelbar nacheinander in wäßriger Phase, insbesondere in einer Reaktionsvorrichtung durchgeführt werden.

16. Verfahren nach einem der Ansprüche 13 bis 15, **dadurch gekennzeichnet, daß** bezogen auf den Festkörpergehalt der Polymerdispersion 20 bis 60 Gew.-%, insbesondere 30 bis 50 Gew.-% Stärke, 1 bis 10 Gew.-%, insbesondere 3 bis 7 Gew.-% bifunktionelles Monomer und 30 bis 79 Gew.-%, insbesondere 43 bis 67 Gew.-% Ethylenderivat eingesetzt werden.

17. Verfahren nach einem der Ansprüche 13 bis 16, **dadurch gekennzeichnet, daß** in Verfahrensschritt (ii) als Katalysator (en) Aluminiumchlorid, Aluminiumzirkoniumacetat, Ammoniumchlorid, Ammoniumphosphat, Magnesiumchlorid, organische Säuren, Natriumchlorat oder -perchlorat in Kombination mit Magnesium- oder Zinksalzen, Zinknitrat oder Zinkperchlorat verwendet wird/werden.

18. Verfahren nach einem der Ansprüche 13 bis 17, **dadurch gekennzeichnet, daß** Verfahrensschritt (ii) bei einer Temperatur von 80 bis 100 °C, vorzugsweise 90 bis 100 °C und insbesondere etwa 90 °C durchgeführt wird.

19. Verfahren nach einem der Ansprüche 13 bis 18, **dadurch gekennzeichnet, daß** die Reaktionsdauer von Verfahrensschritt (ii) 1 bis 5, vorzugsweise 2 bis 4 und insbesondere etwa 3 Stunden beträgt.

20. Verfahren nach einem der Ansprüche 13 bis 19, **dadurch gekennzeichnet, daß** die Kondensationsreaktion in Verfahrensschritt (ii) nicht vollständig, insbesondere bis zu einem Umsatz von etwa 20% des bifunkionellen Monomeren abläuft, und das nicht umgesetzte Monomere in Verfahrensschritt (iii) als Comonomer an der Pfropfpolymerisation teilnimmt.

21. Verfahren nach einem der Ansprüche 13 bis 20, **dadurch gekennzeichnet, daß** in Verfahrensschritt (iii) als Katalysatoren radikalbildende Initiatoren und/oder Redox-Systeme verwendet werden.

22. Verfahren nach einem der Ansprüche 13 bis 21, **dadurch gekennzeichnet, daß** der Katalysator in Verfahrensschritt (iii) ausgewählt ist aus der Gruppe bestehend aus Alkali- und Ammoniumsalzen von Peroxysäuren, insbesondere Kalium-, Natrium- und Ammoniumpersulfat; Wasserstoffperoxid, Perboraten und Azoverbindungen, insbesondere Azodiisobutyronitril; organischen Peroxiden und Hydroperoxiden, insbesondere Benzoylperoxid, tert.-Butylhydroperoxid, Diisopropylbenzenhydroperoxid und tert.-Butylperbenzoat; Natriumhydrogensulfit, Natriumdisulfit, Natriumformaldehydsulfoxylat, Ascorbinsäure, n-Dodecylmerkaptan und n-Butyl-3-merkaptopropionat sowie Kombinationen derselben.

23. Verfahren nach einem der Ansprüche 13 bis 22, **dadurch gekennzeichnet, daß** der Katalysator in Verfahrensschritt (iii) tert.-Butylhydroperoxid, Ascorbinsäure und Natriumdisulfit umfaßt.

24. Verfahren nach einem der Ansprüche 13 bis 23, **dadurch gekennzeichnet, daß** Verfahrensschritt (iii) als Dosierverfahren durchgeführt wird.

25. Verfahren nach einem der Ansprüche 13 bis 24, **dadurch gekennzeichnet, daß** die Dosierdauer 20 bis 180 Minuten, vorzugsweise 30 bis 150 Minuten und insbesondere 30 bis 90 Minuten beträgt.

26. Verfahren nach einem der Ansprüche 13 bis 25, **dadurch gekennzeichnet, daß** die Reaktionstemperatur während Verfahrensschritt (iii) im Bereich von 60 bis 90 °C, vorzugsweise im Bereich von 60 bis 80 °C und insbesondere im Bereich von 70 bis 80 °C liegt.

27. Verfahren nach einem der Ansprüche 13 bis 26, **dadurch gekennzeichnet, daß** nach Abschluß der Verfahrensstufe (iii) gegebenenfalls auf einem pH-Wert von 8,5 ± 0,5 neutralisiert wird.

28. Verwendung eines Pfropfpolymerisats gemäß einem der Ansprüche 1 bis 12 oder hergestellt gemäß einem der Ansprüche 13 bis 27 als Bindemittel in Druckfarben oder Überdrucklacken.

## Claims

1. A graft polymer based on derivatized starch or derivatized starch products as the graft substrate, wherein the starch or starch products is/are derivatized by bifunctional monomers and grafted, at sites of derivatization, with one or more ethylene derivatives, wherein the bifunctional monomers contain a vinyl group, and a functional group that can be condensed with a free hydroxyl group present in the starch or starch products, and the graft polymer contains 30 to 50 % by weight of units derived from starch or starch products, 3 to 7 % by weight of units derived from bifunctional monomers and 43 to 67 % by weight of units derived from ethylene derivatives, relative to the solids content of the dispersion obtained.

2. The graft polymer according to claim 1, wherein the derivatized starch is based on starch selected from grain starch, tuber starch, root starch, fruit starch and/or legume starch.

3. The graft polymer according to claim 1, wherein the derivatized starch product is selected from hydrolyzed starches, preferably desiccated dextrins and modified dextrins as well as combinations thereof.

4. The graft polymer according to any one of the preceding claims, wherein the bifunctional monomers are selected from the group consisting of N-methylolacrylamide, N-methylolmethacrylamide, hydroxyethyl methacrylate, hydroxypropyl methacrylate, and combinations thereof.

5. The graft polymer acdcording to any one of the preceding claims, wherein the ethylene derivatives are selected from the group consisting of vinyl acetate, methyl acrylate, methyl methacrylate, ethyl methacrylate, hydroxyethyl methacrylate, hydroxymethyl methacrylate, glycidyl methacrylate, acrylonitrile, methycrylonitrile, acrylamide, butadiene, styrene, maleic anhydride, and combinations thereof.

6. The graft polymer according to any one of the preceeding claims, which contains 3 to 5 % by weight of units derived from bifunctional monomers.

7. The graft polymer according to any one of the preceding claims, wherein said graft polymer is present in form of an aqueous dispersion.

8. The graft polymer according to claim 7, wherein the polymer dispersion contains common additives, in particular preservatives, neutralizers, defoamers and wetting agents.

9. The graft polymer according to claim 7 or claim 8, which has a solids content of 30 to 70 % by weight, preferably 30 to 60 % by weight, more preferably about 40 % by weight.

10. The graft polymer according to any one of claims 7 to 9, wherein the polymer dispersion is neutralized with a neutralizing agent and contains less than 1 % by weight of volatile components, excluding water, in particular less than about 0.5 % by weight of volatile components.

11. The graft polymer according to any one of claims 7 to 10, wherein the polymer dispersion has a viscosity of 200 to 1000 mPas, in particular 500 to about 600 mPas.

12. The graft polymer according to any one of claims 7 to 11, wherein the particle size of the graft polymer is 0.1 to 0.6 microns, preferably 0.2 to 0.5 microns, more preferably 0.28 to 0.42 microns.

13. A process for preparing a graft polymer according to any one of the preceding claims, said process comprising
(i) providing an aqueous solution or dispersion of starch or starch product;
(ii) derivatizing the dissolved or dispersed starch or the dissolved or dispersed starch product with bifunctional monomers; and
(iii) graft-polymerizing the derivatized starch or derivatized starch product, at sites of derivatization, with ethylene derivatives

14. The process according to claim 13, which is conducted in an aqueous phase without added surfactants or emulsifiers.

15. The process accdording to claim 13 or claim 14, wherein steps (i) to (iii) are conducted in immediate succession in an aqueous phase, in particular in one reaction vessel.

16. The process according to any one of claims 13 to 15, wherein 20 to 60 % by weight, in particular 30 to 50 % by weight of starch, 1 to 10 % by weight, in particular 3 to 7 % by weight of bifunctional monomer, and 30 to 79 % by weight, in particular 43 to 67 % by weight, in particular 43 to 67 % by weight of ethylene derivative are used, relative to the solids content of the polymer dispersion.

17. The process according to any one of claims 13 to 16, wherein as catalyst(s) in step (ii) aluminum chloride, aluminum zirconium acetate, ammonium chloride, ammonium phosphate, magnesium chloride, organic acids, sodium chlorate or sodium perchlorate combined with magnesium or zinc salts, zinc nitrate, zinc perchlorate is/are used.

18. The process according to any one of claims 13 to 17, wherein step (ii) is conducted at a temperature of 80 to 100°C, preferably 90 to 100°C and in particular at about 90°C.

19. The process according to any one of claims 13 to 18, wherein the reaction time for process step (ii) is 1 to 5 hours, preferably 2 to 4 hours and in particular 3 hours.

20. The process according to any one of claims 13 to 19, wherein the condensation reaction of step (ii) does not proceed up to complete conversion, in particular to only about 20 % conversion of the bifunctional monomer, unreacted monomer participating as comonomer in the graft polymerization of step (iii).

21. The process according to any one of claims 13 to 20, wherein in step (iii) radical-forming initiators and/or redox systems are used as catalysts.

22. The process according to any one of claims 13 to 21, wherein the catalyst in step (iii) is selected from the group consisting of alkali and ammonium salts of peroxy acids, in particular potassium, sodium and ammonium persulphates; hydrogen peroxide, perborates and azo compounds, in particular azobisisobutyronitril, organic peroxides and hydroperoxides, in particular benzoyl peroxide, t-butyl hydroperoxide, diisopropyl benzene hydroperoxide and t-butyl perbenzoate; sodium hydrogen sulfite, sodium bisulfite, sodium formaldehyde sulfoxylate, ascorbic acid, n-dodecylmercaptan, n-butyl-3-mercapto-propionate, and combinations thereof.

23. The process according to any one of claims 13 to 22, wherein the catalyst in step (iii) includes t-butyl hydroperoxide, ascorbic acid and sodium bisulfite.

24. The process according to any one of claims 13 to 23, wherein step (iii) is conducted as a metering process.

25. The process according to any one of claims 13 to 24, wherein the metering time is 20 to 180 minutes, preferably 30 to 150 minutes and in particular 30 to 90 minutes.

26. The process according to any one of claims 13 to 25, wherein the reaction temperature during step (iii) ranges from 60 to 90°C, preferably 60 to 80°C and in particular 70 to 80°C.

27. The process according to any one of claims 13 to 26 wherein subsequent to step (iii) it is neutralized, the neutralization being carried out to a pH of 8.5 ± 0.5.

28. The use as binder in printing inks and overprint varnishes of a graft polymer as defined in any one of claims 1 to 12, or prepared as defined in any one of claims 13 to 27.

## Revendications

1. Polymère greffé à base d'amidon dérivatisé ou de produits à base d'amidon dérivatisés sous forme de substrat greffé, **caractérisé en ce que** l'amidon ou les produits à base d'amidon est/sont polymérisé(s) par greffage avec des dérivés d'éthylène sur des points dérivatisés avec des monomères bifonctionnels, les monomères bifonctionnels contenant un groupe fonctionnel condensable avec le groupe hydroxyle libre présent dans l'amidon ou les produits à base d'amidon et un groupe vinyle, et le polymère greffé contenant 30 à 50 % en poids d'unités issues de l'amidon ou des produits à base d'amidon, 3 à 7 % en poids d'unités issues des monomères bifonctionnels, et 43 à 67 % en poids d'unités issues des dérivés d'éthylène, dans tous les cas sur la base de la teneur en matières non volatiles de la dispersion obtenue.

2. Polymère greffé selon la revendication 1, **caractérisé en ce que** l'amidon servant de base est de l'amidon de céréales, de tubercules, de racines, de fruits et/ou de légumineuses.

3. Polymère greffé selon la revendication 1, **caractérisé en ce que** les produits à base d'amidon servant de base sont choisis parmi les amidons hydrolysés, de préférence les dextrines calcinées et dextrines modifiées, ainsi que des combinaisons de ces dernières.

4. Polymère greffé selon l'une quelconque des revendications précédentes, **caractérisé en ce que** les monomères bifonctionnels sont choisis dans le groupe constitué du N-méthylolacrylamide, du N-méthylolméthacrylamide, de l'hydroxyéthylméthacrylate, de l'hydroxypropylméthacrylate et de mélanges de ces derniers.

5. Polymère greffé selon l'une quelconque des revendications précédentes, **caractérisé en ce que** les dérivés d'éthylène sont choisis dans le groupe constitué de l'acétate de vinyle, de l'acrylate de méthyle, du méthacrylate de méthyle, du méthacrylate d'éthyle, de l'hydroxyéthylméthacrylate, de l'hydroxyméthylméthacrylate, du glycidylméthacrylate, de l'acrylonitrile, du méthacrylonitrile, de l'acrylamide, du butadiène, du styrol, de l'anhydride maléique et de mélanges de ces derniers.

6. Polymère greffé selon l'une quelconque des revendications précédentes, **caractérisé en ce qu'**il contient 3 à 5 % en poids de monomère bifonctionnel.

7. Polymère greffé selon l'une quelconque des revendications précédentes, **caractérisé en ce qu'**il est présent sous la forme d'une dispersion polymère aqueuse.

8. Polymère greffé selon la revendication 7, **caractérisé en ce que** la dispersion polymère contient d'autres additifs courants pour les dispersions polymères, en particulier des agents de conservation, agents de neutralisation, agents anti-mousse et agents mouillants.

9. Polymère greffé selon l'une quelconque des revendication 7 ou 8, **caractérisé en ce que** la teneur en matières non volatiles de la dispersion est de 30 à 70 % en poids, de préférence de 30 à 60 % en poids, et en particulier d'environ 40 % en poids.

10. Polymère greffé selon l'une quelconque des revendications 7 à 9, **caractérisé en ce que** la dispersion polymère est neutralisée avec un agent de neutralisation, et contient, hormis l'eau, moins de 1 % en poids, en particulier moins de 0,5 % en poids, de composants volatils.

11. Polymère greffé selon l'une quelconque des revendications 7 à 10, **caractérisé en ce que** la dispersion polymère présente une viscosité située dans une plage de 200 à 1 000 mPas, en particulier d'environ 500 à 600 mPas.

12. Polymère greffé selon l'une quelconque des revendications 7 à 11, **caractérisé en ce que** la granulométrie du polymère greffé est de 0,1 à 0,6 µm, de préférence de 0,2 à 0,5 µm, et en particulier de 0,28 à 0,42 µm.

13. Procédé de production d'un polymère greffé selon l'une quelconque des revendications précédentes, **caractérisé en ce que** :
(i) on produit une solution ou dispersion d'amidon ou d'un produit à base d'amidon aqueuse,
(ii) l'amidon en solution ou en dispersion ou le produit à base d'amidon en solution ou en dispersion est dérivatisé avec des monomères bifonctionnels et
(iii) l'amidon dérivatisé ou le produit à base d'amidon dérivatisé est polymérisé par greffage sur les points dérivatisés avec des dérivés d'éthylène.

14. Procédé selon la revendication 13, **caractérisé en ce que** qu'il est réalisé en phase aqueuse sans addition de détergents ou d'émulsifiants.

15. Procédé selon la revendication 13 ou la revendication 14, **caractérisé en ce que** les étapes (i) à (iii) sont réalisées directement les unes après les autres en phase aqueuse, en particulier dans un dispositif de réaction.

16. Procédé selon l'une quelconque des revendications 13 à 15, **caractérisé en ce qu'**on utilise, sur la base de la teneur en matières non volatiles de la dispersion polymère, 20 à 60 % en poids, en particulier 30 à 50 % en poids d'amidon, 1 à 10 % en poids, en particulier 3 à 7 % en poids de monomère bifonctionnel et 30 à 79 % en poids, en particulier 43 à 67 % en poids de dérivé d'éthylène.

17. Procédé selon l'une quelconque des revendications 13 à 16, caractérisé que le/les catalyseur(s) utilisé(s) à l'étape (ii) du procédé est/sont du chlorure d'aluminium, de l'acétate d'aluminium/zirconium, du chlorure d'ammonium, du phosphate d'ammonium, du chlorure de magnésium, des acides organiques, du chlorate ou du perchlorate de sodium combiné à des sels de magnésium ou de zinc, du nitrate de zinc ou du perchlorate de zinc.

18. Procédé selon l'une quelconque des revendications 13 à 17, **caractérisé en ce que** l'étape (ü) du procédé est réalisée à une température de 80 à 100° C, de préférence de 90 à 100° C, et en particulier d'environ 90° C.

19. Procédé selon l'une quelconque des revendications 13 à 18, **caractérisé en ce que** la durée de réaction de l'étape (ii) du procédé est de 1 à 5, de préférence de 2 à 4, et en particulier d'environ 3 heures.

20. Procédé selon une des revendication 13 à 19, **caractérisé en ce que** la réaction de condensation de l'étape (ii) du procédé n'est pas complète et se poursuit en particulier jusqu'à une conversion d'environ 20 % du monomère bifonctionnel, et **en ce que** le monomère non converti à l'étape (ii) du procédé participe comme comonomère à la polymérisation par greffage.

21. Procédé selon l'une quelconque des revendications 13 à 20, **caractérisé en ce que** les catalyseurs utilisés à l'étape (iii) du procédé sont des initiateurs de radicaux et / ou des systèmes redox.

22. Procédé selon l'une quelconque des revendications 13 à 21, **caractérisé en ce que** le catalyseur de l'étape (iii) du procédé est choisi dans le groupe constitué des sels alcalins ou sels d'ammonium, des acides peroxydes, en particulier sulfate de calium, de sodium ou d'ammonium ; du peroxyde oxygéné, des perborates et des composés azoïques, en particulier azo-bis-isobutyronitrile ; des peroxydes et hydroperoxydes organiques, en particulier peroxyde benzoïque, hydroperoxyde de tert-butyle, hydroperoxyde de diisopropylbenzène, et perbenzoate de tert-butyle ; du sulfite de sodium hydrogéné, du disulfite de sodium, du sulfoxylate formaldéhyde de sodium, de l'acide ascorbique, du n-dodecylmercaptan et du n-butyle-3-mercaptopropionate, ainsi que de combinaisons de ces derniers.

23. Procédé selon l'une quelconque des revendications 13 à 23, **caractérisé en ce que** le catalyseur de l'étape (iii) du procédé comprend de l'hydroperoxyde de tert-butyle, de l'acide ascorbique et du disulfite de sodium.

24. Procédé selon l'une quelconque des revendications 13 à 23, **caractérisé en ce que** l'étape (iii) du procédé est réalisée sous la forme d'un procédé de dosage.

25. Procédé selon l'une quelconque des revendications 13 à 24, **caractérisé en ce que** la durée de dosage est de 20 à 180 minutes, de préférence de 30 à 150 minutes, et en particulier de 30 à 90 minutes.

26. Procédé selon l'une quelconque des revendications 13 à 25, **caractérisé en ce que** la température de réaction pendant l'étape (iii) du procédé se situe dans une plage de 50 à 90° C, de préférence dans une plage de 60 à 80° C, et en particulier dans une plage de 70 à 80° C.

27. Procédé selon l'une quelconque des revendications 13 à 26, **caractérisé en ce qu'**à la fin de l'étape (iii) du procédé est le cas échéant effectuée une neutralisation à un pH d'une valeur de 8,5 ± 0,5.

28. Utilisation d'un polymère greffé selon l'une quelconque des revendications 1 à 13 ou fabriqué selon l'une quelconque des revendications 13 à 27 comme encre d'imprimerie ou vernis de surimpression.
